(19) Europäisches Patentamt
European Patent Office
Office européen des brevets

(11) Veröffentlichungsnummer : **0 014 899**
**B1**

(12) # EUROPÄISCHE PATENTSCHRIFT

(45) Veröffentlichungstag der Patentschrift : **21.10.81**

(51) Int. Cl.³ : **C 09 B 1/28**, C 09 B 1/00, C 07 C 97/24

(21) Anmeldenummer : **80100599.2**

(22) Anmeldetag : **06.02.80**

(54) **Verfahren zur Herstellung kationischer Anthrachinon-Farbstoffe.**

(30) Priorität : **17.02.79 DE 2906132**

(43) Veröffentlichungstag der Anmeldung : **03.09.80 (Patentblatt 80/18)**

(45) Bekanntmachung des Hinweises auf die Patenterteilung : **21.10.81 Patentblatt 81/42**

(84) Benannte Vertragsstaaten : **CH DE FR GB IT**

(56) Entgegenhaltungen :
**DE - A - 1 644 404**
**DE - A - 2 730 342**
**FR - A - 2 086 050**
**GB - A - 1 123 095**
**GB - A - 1 475 081**

(73) Patentinhaber : **BAYER AG**
**Zentralbereich Patente, Marken und Lizenzen**
**D-5090 Leverkusen 1, Bayerwerk (DE)**

(72) Erfinder : **Duchardt, Karl Heinz, Dr.**
**Gerstenkamp 21**
**D-5000 Köln 80 (DE)**
Erfinder : **Gehrke, Günter, Dr.**
**Leopold-Gmelin-Strasse 26**
**D-5000 Köln 80 (DE)**

EP 0 014 899 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Verfahren zur Herstellung kationischer Anthrachinon-Farbstoffe

Gegenstand der Erfindung ist ein Verfahren zur Herstellung kationischer Anthrachinon-Farbstoffe der Formel

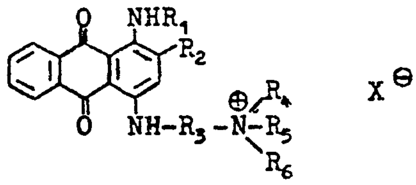

(I)

worin
$R_1$ Wasserstoff, Alkyl oder Cycloalkyl,
$R_2$ Wasserstoff, Alkyl oder Brom,
$R_3$ Alkylen,
$R_4$ und $R_5$ Alkyl, Aryl oder Aralkyl,
$R_6$ Alkyl oder Aralkyl und
$X^{\ominus}$ ein Anion bedeuten,
und die genannten Substituenten ihrerseits durch nichtionische Reste substituiert sein können, durch Umsetzung von Anthrachinonen der Formel

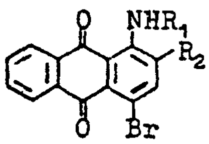

(II)

mit Aminen der Formel

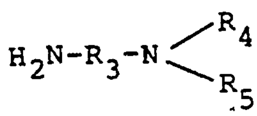

(III)

wobei den Substituenten die oben angegebene Bedeutung zukommt, in Gegenwart eines Protonenfängers und von Kupfersalzen als Katalysator, und anschließende Quaternierung ohne Zwischenisolierung. Das Verfahren ist dadurch gekennzeichnet, daß die Reaktion von (II) und (III) in einem Lösungsmittelgemisch aus 50 bis 90 % eines oder mehrerer aprotischer, nicht oder wenig polarer Lösungsmittel mit 10 bis 50 % eines oder mehrerer protisch- oder aprotisch-polarer Lösungsmittel durchgeführt wird und zum Abfangen der bei der Reaktion gebildeten Säure solche Basen verwendet werden, die den Katalysator nicht ausfällen.

Die Alkylreste haben vorzugsweise 1 bis 6 Kohlenstoffatome und der Alkylenrest 2 bis 4 Kohlenstoffatome. Insbesondere wird unter Aryl Phenyl, unter Aralkyl Benzyl und unter Cycloalkyl Cyclopentyl oder Cyclohexyl verstanden.

Geeignete nichtionische Reste sind beispielsweise Halogen wie Fluor, Chlor oder Brom, Cyan, Hydroxy, Acetoxy und für cyclische Substituenten zusätzlich $C_1$-$C_4$-Alkyl oder Nitro.

In bevorzugten Anthrachinonfarbstoffen der Formel (I) bedeuten:
$R_1$ Wasserstoff, $C_1$-$C_6$-Alkyl oder gegebenenfalls durch Methyl substituiertes Cyclohexyl,
$R_2$ Wasserstoff, Methyl oder Brom,
$R_3$ $C_2$-$C_4$-Alkylen,
$R_4$ und $R_5$ $C_1$-$C_4$-Alkyl, gegebenenfalls durch Chlor oder Methyl substituiertes Phenyl oder Benzyl,
$R_6$ gegebenenfalls durch OH substituiertes $C_1$-$C_4$-Alkyl, oder gegebenenfalls durch Chlor oder Methyl substituiertes Benzyl und
$X^{\ominus}$ ein Anion.

Als Anthrachinone der Formel (I) kommen z.B. in Betracht: 1-Amino-4-brom-anthrachinon, 1-Methylamino-4-brom-anthrachinon, 1-Äthylamino-4-brom-anthrachinon, 1-t-Butylamino-4-brom-anthrachinon, 1-t-Amylamino-4-brom-anthrachinon, 1-Cyclohexylamino-4-brom-anthrachinon, 1-Amino-2,4-dibrom-anthrachinon, 1-Methylamino-2,4-dibrom-anthrachinon, 1-Amino-4-brom-2-methyl-anthrachinon und 1-Methylamino-4-brom-2-methyl-anthrachinon.

Geeignete Amine der Formel (II) sind beispielsweise: N,N-Dimethyl-1,2-diaminoäthan, N-Benzyl-N-methyl-1,2-diaminoäthan, N-Methyl-N-phenyl-1,2-diaminoäthan, N,N-Dimethyl-1,3-diaminopropan, N-Benzyl-N-methyl-1,3-diaminopropan und N-Methyl-N-phenyl-1,3-diaminopropan.

Als Quaternierungsmittel sind besonders geeignet: Dimethylsulfat, Diäthylsulfat und Benzylchlorid.

Als aprotische unpolare oder wenig polare Lösungsmittel sind vor allem aromatische Kohlenwasserstoffe, die durch Chlor oder Nitro substituiert sein können, wie Toluol, Xylol, Chlorbenzol, o-Dichlorbenzol und Nitrobenzol, geeignet.

Bevorzugte protisch-polare Lösungsmittel sind aliphatische Alkohole wie Methanol, Äthanol und Propanol, gegebenenfalls unter Zusatz geringer Anteile von Wasser.

Bevorzugte aprotisch-polare Lösungsmittel sind Pyridin und Sulfolan.

Die Lösungsmittel werden in einem Gemisch verwendet, das zu 10-20 % das protisch-oder aprotisch-polare und 80-90 % das aprotisch unpolare oder wenig polare Lösungsmittel enthält. Besonders bevorzugt sind solche Gemische, die, bei der oben genannten Zusammensetzung, noch 1-2 % Wasser enthalten.

Als Basen können Alkalicarbonate und -hydrogencarbonate verwendet werden.

Das erfindungsgemäße Verfahren wird bei der Siedetemperatur des Lösungsmittelgemisches durchgeführt. Temperaturen von 50-100 °C, insbesondere 70-80 °C, sind bevorzugt.

Die Umsetzung von Bromanthrachinonen mit Aminen in Gegenwart von Kupfersalzen, z.B. dem Chlorid oder Acetat, als Katalysator zu Anthrachinon-Farbstoffen der Formel (I) ist aus der DE-PS 11 50 652 und der DE-OS 27 40 342 bereits bekannt.

Es wurde nun gefunden, daß die Verwendung eines speziellen Lösungsmittel-Gemisches der oben beschriebenen Zusammensetzung die Selektivität der Umsetzung verbessert, wenn geeignete Protonenfänger eingesetzt werden. Sie sind so zu wählen, daß das durch Komplexbildung mit dem Amin gelöste Kupfersalz nicht als Hydroxid ausgefällt wird. Durch diese homogene Katalyse erreicht man gegenüber dem in der DE-OS 27 30 342, Beispiel 2, beschriebenen Verfahren eine Steigerung der Ausbeute um 10 %. Im Vergleich zum in der DE-PS 11 50 652 beschriebenen Verfahren erhält man ein qualitativ hochwertigeres Produkt in um 30 % verbesserter Ausbeute.

Beispiel 1

118,5 g 1-Methylamino-4-brom-anthrachinon werden in einem Gemisch aus 300 ml o-Dichlorbenzol und 45 ml Methanol suspendiert und, nach Zugabe von 27 g Kristallsoda, 54 ml N-N-Dimethyl-1,3-diaminopropan und 1,2 g Kupfer (I) chlorid, unter Rückfluß (75-80 °C) erhitzt, bis alles Ausgangsmaterial verbraucht ist. Darauf werden Methanol, überschüssiges Amin und Wasser — zuletzt im Vakuum — abdestilliert. Nach Aufstocken auf 450 ml mit o-Dichlorbenzol wird dreimal mit Wasser gewaschen, die organische Phase auf 700 ml aufgestockt und trockendestilliert. Das Reaktionsgemisch wird auf 60 °C abgekühlt, mit 13 ml Methanol versetzt und mit 38 ml Dimethylsulfat bei 60 °C quaterniert. Es werden 167 g (96 %) Farbstoff erhalten.

Setzt man die in Tabelle 1 aufgeführten Anthrachinone mit den ebenda bezeichneten Aminen, wie in Beispiel 1 beschrieben, um und quaterniert anschließend mit den in der Tabelle angegebenen Quaternierungsmitteln, so erhält man weitere, zum Teil bekannte, kationische Farbstoffe der Formel I.

Tabelle 1

| Bsp.-Nr. | $R_1$ | $R_2$ | $R_3$ | $R_4$ | $R_5$ | Quaternierungsmittel | $R_6$ |
|---|---|---|---|---|---|---|---|
| 2 | H | H | $-(CH_2)_3-$ | $-CH_3$ | $-CH_3$ | $(CH_3)_2SO_4$ | $CH_3$ |
| 3 | $C_2H_5$ | H | $-(CH_2)_2-$ | $-CH_3$ | $-CH_3$ | $(CH_3)_2SO_4$ | $CH_3$ |
| 4 | $C(CH_3)_3$ | H | $-(CH_2)_3-$ | $-CH_3$ | $-CH_3$ | 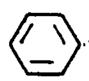 $-CH_2Cl$ | $CH_2$ 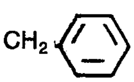 |
| 5 | $C(CH_3)_2C_2H_5$ | H | $-(CH_2)_2-$ | $-CH_3$ | $-C_6H_5$ | $(C_2H_5)_2SO_4$ | $C_2H_5$ |
| 6 | 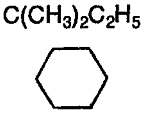 | H | $-(CH_2)_3-$ | $-CH_3$ | $-C_6H_5$ | 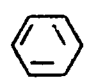 $-CH_2Cl$ | $CH_2-$ 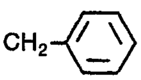 |
| 7 | H | Br | $-(CH_2)_3-$ | $-CH_3$ | $-CH_3$ | $(CH_3)_2SO_4$ | $CH_3$ |
| 8 | $CH_3$ | Br | $-(CH_2)_3-$ | $-CH_3$ | $-CH_3$ | $(CH_3)_2SO_4$ | $CH_3$ |
| 9 | H | $CH_3$ | $-(CH_2)_2-$ | $-CH_3$ | $-CH_3$ | $(CH_3)_2SO_4$ | $CH_3$ |
| 10 | $CH_3$ | $CH_3$ | $-(CH_2)_3-$ | $-CH_3$ | $-CH_3$ | 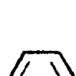 $-CH_2Cl$ | $CH_2$ 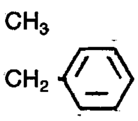 |

**Ansprüche**

1. Verfahren zur Herstellung kationischer Anthrachinon-Farbstoffe der Formel

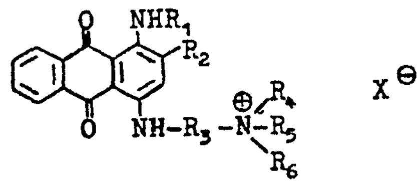

worin
$R_1$ Wasserstoff, Alkyl oder Cycloalkyl,
$R_2$ Wasserstoff; Alkyl oder Brom,
$R_3$ Alkylen
$R_4$, $R_5$ Alkyl, Aryl oder Aralkyl,
$R_6$ Alkyl oder Aralkyl und
$X^{\ominus}$ ein Anion bedeuten,
und die genannten Substituenten ihrerseits durch nichtionische Reste substituiert sein können, durch Umsetzung von Anthrachinonen der Formel

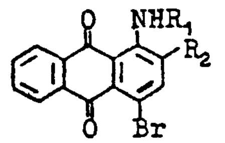

mit Aminen der Formel

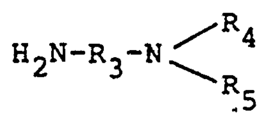

in Gegenwart von Protonenfängern und Kupfersalzen als Katalysator, und anschließende Quaternierung mit Verbindungen der Formel

$$R_6 - X$$

ohne Zwischenisolierung, dadurch gekennzeichnet, daß man die Reaktion des 4-Bromanthrachinons mit dem Amin in einem Lösungsmittelgemisch aus 50-90 % eines oder mehrerer aprotischer, nicht oder wenig polarer Lösungsmittel mit 10-50 % eines oder mehrerer protisch- oder aprotisch-polarer Lösungsmittel durchführt und zum Abfangen der bei der Reaktion gebildeten Säure solche Basen verwendet, die den Katalysator nicht ausfällen.

2. Verfahren gemäß Patentanspruch 1, dadurch gekennzeichnet, daß man solche Anthrachinonfarbstoffe der Formel des Anspruchs 1 herstellt, worin
$R_1$ Wasserstoff, $C_1$-$C_6$-Alkyl oder gegebenenfalls durch Methyl substituiertes Cyclohexyl,
$R_2$ Wasserstoff, Methyl oder Brom,
$R_3$ $C_2$-$C_4$-Alkylen,
$R_4$ und $R_5$ $C_1$-$C_4$-Alkyl, gegebenenfalls durch Chlor oder Methyl substituiertes Phenyl oder Benzyl,
$R_6$ $C_1$-$C_4$-Alkyl, das durch OH substituiert sein kann, oder gegebenenfalls durch Chlor oder Methyl substituiertes Benzyl und
$X^{\ominus}$ ein Anion
bedeuten.

3. Verfahren gemäß Patentanspruch 1, dadurch gekennzeichnet, daß man als 4-Brom-anthrachinone 1-Amino-4-bromanthrachinon, 1-Amino-2,4-dibromanthrachinon, 1-Methylamino-4-bromanthrachinon oder 1-Methylamino-2,4-dibromanthrachinon verwendet.

4. Verfahren gemäß Patentanspruch 1, dadurch gekennzeichnet, daß man als Amine N,N-Dimethyl-1,2-diaminoäthan, N-Methyl-N-phenyl-1,2-diaminoäthan, N,N-Dimethyl-1,3-diaminopropan oder N-Methyl-N-phenyl-1,3-diaminoäthan verwendet.

5. Verfahren gemäß Patentanspruch 1, dadurch gekennzeichnet, daß man als Quaternierungsmittel Dimethylsulfat, Diäthylsulfat oder Benzylchlorid verwendet.

6. Verfahren nach Patentanspruch 1, dadurch gekennzeichnet, daß man als Lösungsmittel-Gemisch ein Gemisch aus Toluol, Xylol, Chlorbenzol, o-Dichlorbenzol oder Nitrobenzol und Methanol, Äthanol, Methanol mit 10-15 % Wasser oder Äthanol mit 10-15 % Wasser verwendet.

7. Verfahren gemäß Patentanspruch 1, dadurch gekennzeichnet, daß man als Lösungsmittel-Gemisch o-Dichlorbenzol mit 10-15 % Methanol und 1-1,5 % Wasser und als Protonenfänger Soda verwendet.

8. Verfahren gemäß Patentanspruch 1 und 7, dadurch gekennzeichnet, daß als Amin N,N-Dimethyl-1,3-diaminopropan verwendet.

9. Verfahren gemäß Patentanspruch 1 und 8, dadurch gekennzeichnet, daß man als Anthrachinon 1-Methylamino-4-brom-anthrachinon und als Quaternierungsmittel Dimethylsulfat verwendet.

## Claims

1. Process for the preparation of cationic anthraquinone dyestuffs of the formula

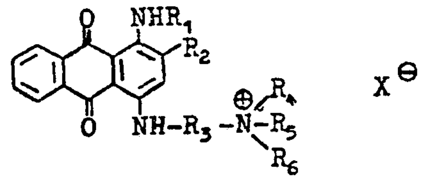

wherein
$R_1$ denotes hydrogen, alkyl or cycloalkyl,
$R_2$ denotes hydrogen, alkyl or bromine,
$R_3$ denotes alkylene,
$R_4$ and $R_5$ denote alkyl, aryl or aralkyl,
$R_6$ denotes alkyl or aralkyl and
$X^{\ominus}$ denotes an anion,
and the indicated substituents can in their turn be substituted by non-ionic radicals, by reacting anthraquinones of the formula

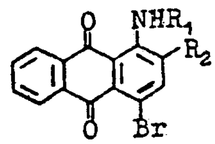

with amines of the formula

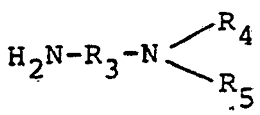

in the presence of proton acceptors and copper salts as a catalyst, and subsequently quaternising the product with compounds of the formula

$$R_6 - X$$

without intermediate isolation, characterised in that the reaction of the 4-bromoanthraquinone with the amine is carried out in a solvent mixture consisting of 50-90 % of one or more aprotic, non-polar or slightly polar solvents and 10-50 % of one or more protic or aprotic, polar solvents, and bases which do not precipitate the catalyst are used to trap the acid formed during the reaction.

2. Process according to Patent Claim 1, characterised in that those anthraquinone dyestuffs of the formula of Claim 1, wherein
$R_1$ denotes hydrogen, $C_1$-$C_6$-alkyl or cyclohexyl which is optionally substituted by methyl,
$R_2$ denotes hydrogen, methyl or bromine,
$R_3$ denotes $C_2$-$C_4$-alkylene,
$R_4$ and $R_5$ denote $C_1$-$C_4$-alkyl or phenyl or benzyl which is optionally substituted by chlorine or methyl,
$R_6$ denotes $C_1$-$C_4$-alkyl which can be substituted by OH, or benzyl which is optionally substituted by chlorine or methyl, and
$X^{\ominus}$ denotes an anion,
are prepared.

3. Process according to Patent Claim 1, characterised in that 1-amino-4-bromoanthraquinone, 1-amino-2,4-dibromoanthraquinone, 1-methylamino-4-bromoanthraquinone or 1-methylamino-2,4-di-

bromoanthraquinone are used as 4-bromo-anthraquinones.

4. Process according to Patent Claim 1, characterised in that N,N-dimethyl-1,2-diaminoethane, N-methyl-N-phenyl-1,2-diaminoethane, N,N-dimethyl-1,3-diamino-propane or N-methyl-N-phenyl-1,3-diaminoethane are used as amines.

5. Process according to Patent Claim 1, characterised in that dimethyl sulphate, diethyl sulphate or benzyl chloride is used as the quaternising agent.

6. Process according to Patent Claim 1, characterised in that a mixture of toluene, xylene, chlorobenzene, o-dichlorobenzene or nitrobenzene and methanol, ethanol, methanol containing 10-15 % of water, or ethanol containing 10-15 % of water is used as the solvent mixture.

7. Process according to Patent Claim 1, characterised in that o-dichlorobenzene containing 10-15 % of methanol and 1-1.5 % of water is used as the solvent mixture and sodium carbonate is used as the proton acceptor.

8. Process according to Patent Claims 1 and 7, characterised in that N,N-dimethyl-1,3-diamino-propane is used as the amine.

9. Process according to Patent Claims 1 and 8, characterised in that 1-methylamino-4-bromoanthraquinone is used as the anthraquinone and dimethyl sulphate is used as the quaternising agent.

**Revendications**

1. Procédé de production de colorants anthraquinoniques cationiques de formule :

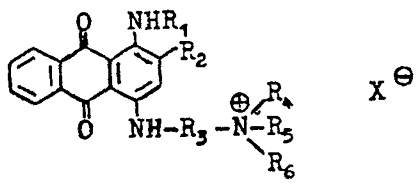

dans laquelle :

$R_1$ est l'hydrogène, un groupe alkyle ou un groupe cycloalkyle,
$R_2$ est l'hydrogène, un groupe alkyle ou le brome,
$R_3$ est un groupe alkylène,
$R_4$, $R_5$ représentent un groupe alkyle, aryle ou aralkyle,
$R_6$ est un groupe alkyle ou aralkyle, et
$X^{\ominus}$ désigne un anion,

et les substituants mentionnés peuvent, quant à eux, être substitués par des restes non ioniques, par réaction d'anthraquinones de formule :

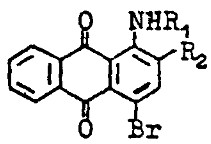

avec des amines de formule :

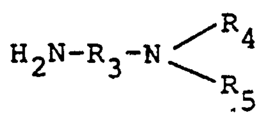

en présence d'accepteurs de protons et de sels de cuivre comme catalyseur, et quaternisation subséquente avec des composés de formule :

$$R_6 - X$$

sans isolement intermédiaire, caractérisé en ce que la réaction de la 4-bromanthraquinone avec l'amine est conduite dans un mélange de solvants formé de 50-90 % d'un ou plusieurs solvants aprotiques non ou peu polaires et de 10 à 50 % d'un ou plusieurs solvants polaires protiques ou aprotiques, et on utilise pour fixer l'acide formé lors de la réaction, des bases qui ne précipitent pas le catalyseur.

2. Procédé suivant la revendication 1, caractérisé en ce qu'on prépare des colorants anthraquinoniques de la formule de la revendication 1, dans laquelle :

$R_1$ est l'hydrogène, un groupe alkyle en $C_1$ à $C_6$ ou un groupe cyclohexyle éventuellement substitué par le radical méthyle,

$R_2$ est l'hydrogène, un groupe méthyle ou le brome,

$R_3$ est un groupe alkylène en $C_2$ à $C_4$,

$R_4$ et $R_5$ représentent un groupe alkyle en $C_1$ à $C_4$, un groupe phényle ou benzyle éventuellement substitué par du chlore ou le radical méthyle,

$R_6$ est un groupe alkyle en $C_1$ à $C_4$, qui peut être substitué par OH, ou un groupe benzyle éventuellement substitué par du chlore ou le radical méthyle et

$X^{\ominus}$ est un anion.

3. Procédé suivant la revendication 1, caractérisé en ce qu'on utilise comme 4-bromanthraquinones, la 1-amino-4-bromanthraquinone, la 1-amino-2,4-dibromanthraquinone, la 1-méthylamino-4-bromanthraquinone ou la 1-méthylamino-2,4-dibromanthraquinone.

4. Procédé suivant la revendication 1, caractérisé en ce qu'on utilise comme amines le N,N-diméthyl-1,2-diamino-éthane, le N-méthyl-N-phényl-1,2-diamino-éthane, le N,N-diméthyl-1,3-diaminopropane ou le N-méthyl-N-phényl-1,3-diamino-éthane.

5. Procédé suivant la revendication 1, caractérisé en ce qu'on utilise comme agents de quaternisation le sulfate de diméthyle, le sulfate de diéthyle ou le chlorure de benzyle.

6. Procédé suivant la revendication 1, caractérisé en ce qu'on utilise comme mélange de solvants un mélange de toluène, de xylène, de chlorobenzène, de o-dichlorobenzène ou de nitrobenzène et de méthanol, d'éthanol, de méthanol avec 10-15 % d'eau ou d'éthanol avec 10-15 % d'eau.

7. Procédé suivant la revendication 1, caractérisé en ce qu'on utilise comme mélange de solvants le o-dichlorobenzène avec 10-15 % de méthanol et 1-1,5 % d'eau et, comme accepteur de protons, le carbonate de sodium.

8. Procédé suivant les revendications 1 et 7, caractérisé en ce qu'on utilise comme amine le N,N-diméthyl-1,3-diaminopropane.

9. Procédé suivant les revendications 1 et 8, caractérisé en ce qu'on utilise comme anthraquinone la 1-méthylamino-4-bromanthraquinone et comme agent de quaternisation le sulfate de diméthyle.